# EUROPEAN PATENT SPECIFICATION

(11) **EP 4 006 731 B1**
(45) Date of publication and mention of the grant of the patent: **10.05.2023**
(21) Application number: 21182344.8
(22) Date of filing: 29.06.2021
(51) Int. Cl.: G06F 11/07, G06F 11/32, G06F 11/36

(54) **METHOD, APPARATUS, DEVICE, STORAGE MEDIUM AND COMPUTER PROGRAM PRODUCT FOR TESTING CODE**
VERFAHREN, EINRICHTUNG, VORRICHTUNG, SPEICHERMEDIUM UND COMPUTERPROGRAMMPRODUKT ZUM TESTEN VON CODE
PROCÉDÉ, APPAREIL, DISPOSITIF, SUPPORT D'ENREGISTREMENT ET PRODUIT DE PROGRAMME INFORMATIQUE POUR TESTER UN CODE

(30) Priority: 27.11.2020 CN 202011362254
(43) Date of publication of application: 01.06.2022
(73) Proprietor: BEIJING BAIDU NETCOM SCIENCE AND TECHNOLOGY CO. LTD., 100085 Beijing (CN)
(72) Inventor: ZHANG, Chunle, Beijing, 100085 (CN); LUO, Tao, Beijing, 100085 (CN); LAN, Xiang, Beijing, 100085 (CN)
(74) Representative: Gill Jennings & Every LLP

(56) References cited:
- Smart John Ferguson: "Jenkins The Definitive Guide", , 1 January 2011 (2011-01-01), pages 1-417, XP055866231, Retrieved from the Internet: URL:https://www.bogotobogo.com/DevOps/Jenk ins/images/Intro_install/jenkins-the-defin itive-guide.pdf [retrieved on 2021-11-26]
- C Simon: "java -How to Re-run failed JUnit tests immediately? -Stack Overflow", , 28 November 2011 (2011-11-28), pages 1-8, XP055868498, Retrieved from the Internet: URL:https://stackoverflow.com/questions/82 95100/how-to-re-run-failed-junit-tests-imm ediately [retrieved on 2021-12-02]
- Mahajan Amod: "TestNG Tutorials 68 : Rerun Failed Test Method Using IRetryAnalyzer Interface", , 30 December 2018 (2018-12-30), pages 1-9, XP055868503, Retrieved from the Internet: URL:http://makeseleniumeasy.com/2018/12/30 /iretryanalyzer-in-testng-using-retryanaly zer-attribute-of-test-annotation/ [retrieved on 2021-12-02]
- LUO QINGZHOU QINGZHOULUO@GMAIL COM ET AL: "An empirical analysis of flaky tests", SUPPORTING GROUP WORK, ACM, 2 PENN PLAZA, SUITE 701 NEW YORK NY 10121-0701 USA, 11 November 2014 (2014-11-11), pages 643-653, XP058502483, DOI: 10.1145/2635868.2635920 ISBN: 978-1-4503-3043-5

## Description

### TECHNICAL FIELD

Embodiments of the present disclosure relate to the field of computer technology, specifically to the field of deep learning technology, and more specifically to a method, apparatus, device, storage medium and computer program product for testing a code.

### BACKGROUND

Continuous integration (CI) system is an important part of project development and release. Excellent projects attract people from all walks of life to contribute codes, in this regard, stability of the CI system is extremely important. Tasks of the CI system generally include a plurality of types, having a wide range of tests. Moreover, the number of codes submitted by users is large, and a code submitted by each user every time needs to go through the tasks in the CI system. There are a lot of reasons for failures of CI tasks. How to warn these abnormal errors in a huge amount of CI tasks is an important issue to improve the stability and accuracy of the CI system. Document "Jenkins The Definitive Guide" discloses using Continuous Integration in various fields. Specifically, this document discloses how to build projects using several non-Java technologies, including as Grails, Ruby on Rails and .NET. Document "java -How to Re-run failed JUnit tests immediately? - Stack Overflow" discloses, by Q&A, a way to re-run failed JUnit tests inlmediately. Specifically, this document discloses a way to solve the raised problem with a testRule, and specifically discloses codes for performing the testRule.

### SUMMARY

A method, apparatus, device, storage medium and computer program product for testing a code are provided.

In a first aspect, an embodiment of the present disclosure provides a method for testing a code, the method including: determining, in response to receiving a code submission request of a user, a code submitted by the user; performing integration testing on the code, and performing at least one preset test task; acquiring error information of the at least one preset test task, where the error information is outputted when the code fails to perform a test task; generating, in response to determining that the error information meets a preset condition, warning information based on the error information, where the preset condition includes: occurrence time of an error corresponding to the error information is within a preset period, an error type of the error belongs to a preset type, the code corresponding to the error is an abnormal code; and outputting the warning information, where the method further includes: determining, for each test task indicated by the error information, a number of executions of the test task; determining, in response to determining that the number of executions of the test task is 1, an error type of an error in the test task and a number of errors corresponding to each error type; determining, in response to determining that the error type is a preset type and the number of errors corresponding to the preset type is less than a second preset threshold, that the error information meets the preset condition; and determining, in response to determining that the number of executions of the test task is greater than or equal to 2, that the error information meets the preset condition.

In a second aspect, an embodiment of the present disclosure provides an apparatus for testing a code, the apparatus including: a code acquisition unit, configured to determine, in response to receiving a code submission request of a user, a code submitted by the user; a code testing unit, configured to perform integration testing on the code, and perform at least one preset test task; an error acquisition unit, configured to acquire error information of the at least one preset test task, where the error information is outputted when the code fails to perform a test task; a warning generation unit, configured to generate, in response to determining that the error information meets a preset condition, warning information based on the error information, where the preset condition includes: occurrence time of an error corresponding to the error information is within a preset period, an error type of the error belongs to a preset type, the code corresponding to the error is an abnormal code; and a warning outputting unit, configured to output the warning information, where the apparatus further comprises a condition determination unit, configured to: determine, for each test task indicated by the error information, a number of executions of the test task; determine, in response to determining that the number of executions of the test task is less than a first preset threshold, an error type of an error in the test task and a number of errors corresponding to each error type; determine, in response to determining that the error type is a preset type and the number of errors corresponding to the preset type is less than a second preset threshold, that the error information meets the preset condition; and determining, in response to determining that the number of executions of the test task is greater than or equal to 2, that the error information meets the preset condition.

In a third aspect, an embodiment of the present disclosure provides an electronic device for testing a code, the device electronic including: at least one processor; and a memory, communicatively connected with the at least one processor; the memory storing instructions executable by the at least one processor, and the instructions, when executed by the at least one processor, causing the at least one processor to perform the method according to the first aspect.

In a fourth aspect, an embodiment of the present disclosure provides a non-transitory computer readable storage medium, storing computer instructions, the computer instructions being used to cause a computer to perform the method according to the first aspect.

In a fifth aspect, an embodiment of the present disclosure provides a computer program product including a computer program, where the computer program, when executed by a processor, implements the method according to the first aspect.

The technology according to embodiments of the present disclosure can warn abnormal errors of a CI system in a huge number of CI tasks, and improve a stability and accuracy of the CI system.

It should be understood that the content described in this section is not intended to identify key or important features of embodiments of the present disclosure, nor is it intended to limit the scope of embodiments of the present disclosure. Other features of embodiments of the present disclosure may be easily understood by the following description.

### BRIEF DESCRIPTION OF THE DRAWINGS

The accompanying drawings are used to better understand the present solution, and do not constitute a limitation to the present disclosure.
Fig. 1 is a diagram of an example system architecture in which embodiments of the present disclosure may be implemented;
Fig. 2 is a flowchart of a method for testing a code according to an embodiment of the present disclosure;
Fig. 3 is a schematic diagram of an application scenario of the method for testing a code according to an embodiment of the present disclosure;
Fig. 4 is a flowchart of the method for testing a code according to another embodiment of the present disclosure;
Fig. 5 is a schematic structural diagram of an apparatus for testing a code according to an embodiment of the present disclosure; and
Fig. 6 is a block diagram of an electronic device for implementing the method for testing a code according to an embodiment of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

It should also be noted that some embodiments in the present disclosure and some features in the disclosure may be combined with each other on a non-conflict basis. Features of the present disclosure will be described below in detail with reference to the accompanying drawings and in combination with embodiments.

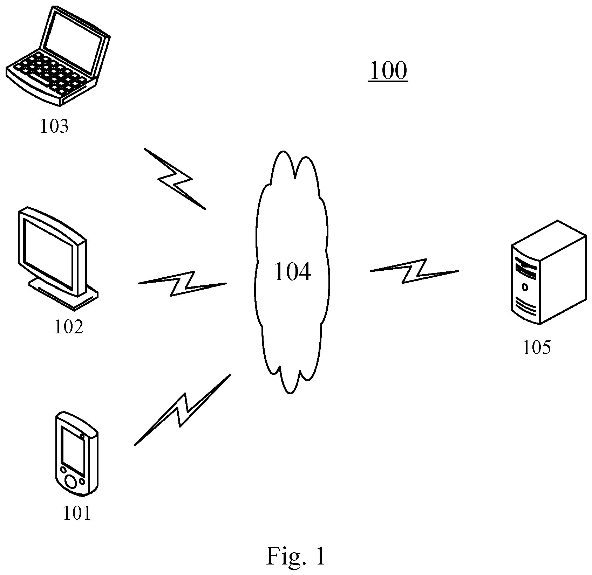

Fig. 1 shows an example system architecture 100 in which a method for testing a code or an apparatus for testing a code of embodiments of the present disclosure may be implemented.

As shown in Fig. 1, the system architecture 100 may include terminal devices 101, 102, 103, a network 104 and a server 105. The network 104 serves a medium for providing a communication link between the terminal devices 101, 102, 103 and the server 105. The network 104 may include various types of connections, such as wired or wireless communication links, or optic fibers.

A user may interact with the server 105 through the network 104 using the terminal device 101, 102, 103 to receive or send messages. Various communication client applications may be installed on the terminal devices 101, 102, 103, such as code submission applications, web browsing applications, instant messaging tools, email clients, or social platform software.

The terminal devices 101, 102, 103 may be hardware or software. When the terminal devices 101, 102, 103 are hardware, the terminal devices 101, 102, 103 may be various electronic devices having display screens and supporting code input, including but not limited to smart phones, tablet computers, laptop computers, desktop computers, and so on. When the terminal devices 101, 102, 103 are software, the terminal devices 101, 102, 103 may be installed in the electronic devices listed above. They may be implemented as a plurality of pieces of software or software modules (for example, for providing distributed services), or as a single piece of software or software module, which is not limited herein.

The server 105 may be a server that provides various services, for example, a backend server that tests codes submitted by users using the terminal devices 101, 102, and 103 . The backend server may analyze a received submission request, determine a code submitted by a user, and test the code, and at the same time may feed back a processing result (for example, a test result) to the terminal devices 101, 102, 103.

It should be noted that the server 105 may be hardware or software. When the server 105 is hardware, the server 105 may be implemented as a distributed server cluster composed of a plurality of servers, or as a single server. When the server 105 is software, the server 105 may be implemented as a plurality of pieces of software or software modules (for example, for providing distributed servers), or as a single piece of software or software module, which is not limited herein.

It should be noted that the method for testing a code provided by embodiments of the present disclosure is generally performed by the server 105. Accordingly, the apparatus for testing a code is generally provided in the server 105.

It should be understood that the numbers of terminal devices, networks, and servers in Fig. 1 are merely illustrative. Depending on the implementation needs, there may be any number of terminal devices, networks, and servers.

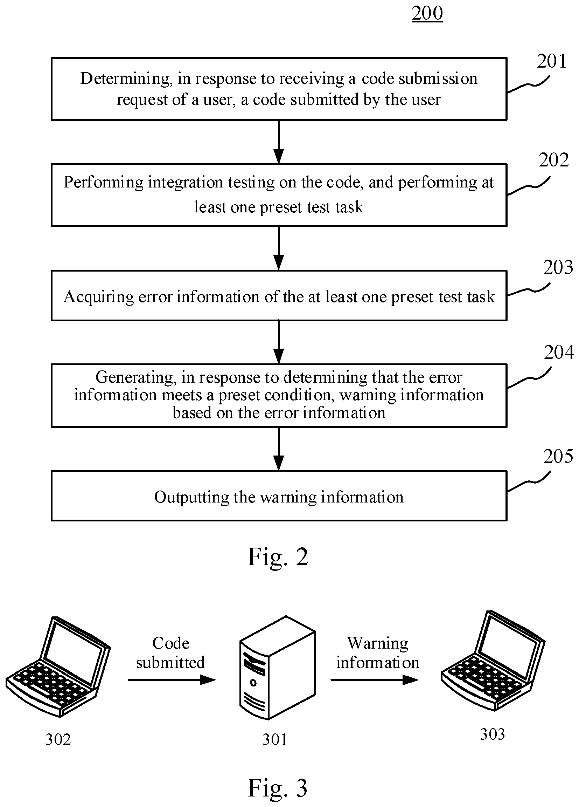

With further reference to Fig. 2, a flow 200 of a method for testing a code according to an embodiment of the present disclosure is illustrated. The method for testing a code of the present embodiment includes following steps.

Step 201, determining, in response to receiving a code submission request of a user, a code submitted by the user.

In the present embodiment, an executing body of the method for testing a code (for example, the server 105 shown in Fig. 1) may receive the code submission request sent by the user using a terminal device used by the user. The code submission request may include information such as the user's identification, submission time, and the submitted code. The user may send the code submission request to the executing body using a code submission software installed in the terminal device. After receiving the code submission request, the executing body may analyze the code submission request to determine the code submitted by the user.

Step 202, performing integration testing on the code, and performing at least one preset test task.

After determining the code submitted by the user, the executing body may perform integration testing on the code to perform at least one test task of a CI system. The executing body may call a compilation platform (such as PaddlePaddle, also known as Feijiang, PaddlePaddle is based on Baidu's years of deep learning technology research and business applications, which is the first industry-level deep learning platform with open source, leading technology and complete functions in China) to perform integration testing on the above code. In this way, the code may perform the at least one preset test task. The test task may be set by those skilled in the art according to an actual project. If the user's code successfully performs each test task, then the user's code may be incorporated into a code library.

In some specific applications, each test task has a particular code and name. After the code performs each test task successfully, a success message may be outputted. When the code fails to perform each test task, error information may be outputted. It may be understood that if the executing body receives the success message, it indicates that there is no problem with the user's code, and there is no problem with the test task.

Step 203, acquiring error information of the at least one preset test task.

The executing body may acquire the error information of each test task, after each test task is performed. The executing body may acquire the error information from a log generated during performing the task. Alternatively, the executing body may acquire the error information by performing a buried point in a test task script preset by those skilled in the art. The error information may include an error type, detailed information of the error (such as a code corresponding to the error).

Step 204, generating, in response to determining that the error information meets a preset condition, warning information based on the error information.

After acquiring the error information, the executing body may determine whether the error information meets the preset condition. The preset condition may include, but is not limited to: occurrence time of the error is within a preset period, the error type belongs to a preset type, the code corresponding to the error is an abnormal code, and so on. If the error information meets the preset condition, the executing body may generate the warning information based on the error information. The executing body may directly use the error information as the warning information. Alternatively, the executing body may first determine the error type in the error information, then count the number of occurrences of the error of the error type, and if the number of occurrences of the error type exceeds a threshold, determine the error type as the warning information.

Step 205, outputting the warning information.

After generating the warning information, the executing body may output the warning information. The output here may be output to a project leader instead of output to the user who submitted the code. In this way, the project leader may troubleshoot the CI system targeted based on the warning information.

With further reference to Fig. 3, a schematic diagram of an application scenario of the method for testing a code according to an embodiment of the present disclosure is illustrated. In the application scenario of Fig. 3, a server 301 may receive a code submitted by a user using a terminal device 302, and after performing integration testing on the code, error information of each test task may be acquired. The error information may be as shown in a table as follows. An executing body analyzes EXCODE in the table and determines that an error type is unit test failure, and the number of errors is less than 3, then it is considered that the current error may be caused by an incorporated code or a CI machine or a network. Warning information may be outputted to a terminal 303 used by a person in charge, prompting the person in charge of the CI system to troubleshoot the problem based on the above reasons.

**Table 1 Error information table**

| Parameter name | Description |
|---|---|
| TIME | Time |
| PR | User PULL REQUEST number |
| COMMITID | User's submission request ID |
| CINAME | Task name in CI system |
| EXCODE | Exit code of CI task. (Successful EXCODE=0, compilation failure EXCODE=7; unit test failure EXCODE=8; unit test coverage rate not up to standard EXCODE=9) |
| FAILED_MESSAGE | Error details |
| ERROR_COUNT | Number of errors |

The method for testing a code provided by an embodiment of the present disclosure may generate the warning information when the error information meets the preset condition, realize warning of abnormal errors in the CI system in a huge number of CI tasks, thereby improving a stability and accuracy of the CI system.

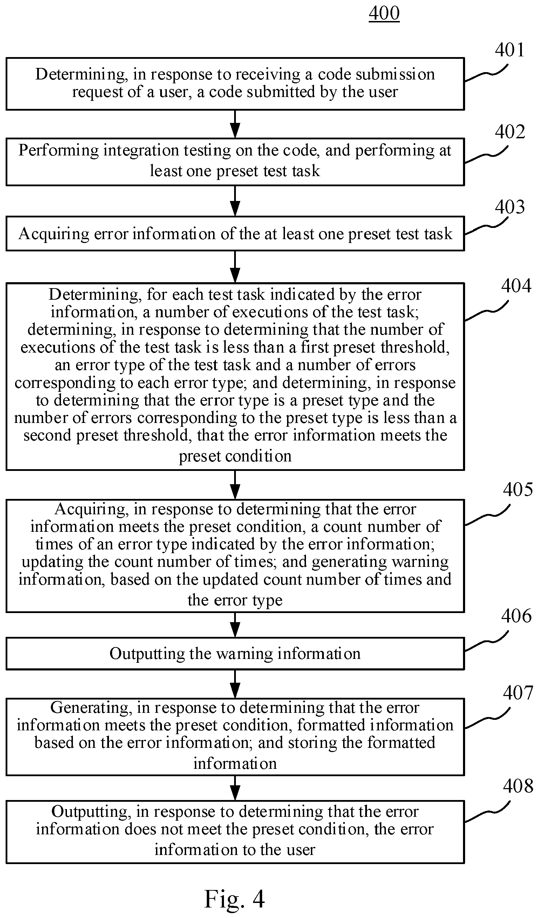

With further reference to Fig. 4, a flow 400 of the method for testing a code according to another embodiment of the present disclosure is illustrated. As shown in Fig. 4, the method for testing a code of the present embodiment may include following steps.

Step 401, determining, in response to receiving a code submission request of a user, a code submitted by the user.

Step 402, performing integration testing on the code, and performing at least one preset test task.

Step 403, acquiring error information of the at least one preset test task.

Step 404, determining, for each test task indicated by the error information, a number of executions of the test task; determining, in response to determining that the number of executions of the test task is less than a first preset threshold, an error type of the test task and a number of errors corresponding to each error type; and determining, in response to determining that the error type is a preset type and the number of errors corresponding to the preset type is less than a second preset threshold, that the error information meets the preset condition.

After acquiring the error information, the executing body may analyze the error information and determine each test task indicated by the error information. For example, the error information may include error information of a test task 1, and may also include error information of a test task 2. For each test task, the executing body may determine the number of executions of the test task. The executing body may determine the number of executions of the test task by an identification or execution time or other related information of the test task. Generally, after a first failure, the user is not certain whether it is because of his own code or the CI system, therefore, the user may re-perform this task manually. If the number of executions is greater than or equal to 2, it indicates that the test task is performed repeatedly. Under normal circumstances, if the same test task is repeatedly performed for a plurality of times and errors still occur, mostly it is the problem with the user's own code.

If the executing body determines that the test task is not a repeatedly performed task, that is, the number of executions is equal to 1, then the error type of the test task may be further determined. The executing body may acquire a task log and determine the error type based on error-related information in the task log. Here, the error type may include: unit test failure, insufficient unit test coverage, compilation failure, and so on.

After determining the error type, the executing body may determine whether the error type is the preset type. The preset type here may be, for example, unit test failure. If the error type is the preset type, the number of errors corresponding to the error type may be further determined. If the number of errors is greater than the second preset threshold, such as greater than 20, in this regard, basically it may be determined to be a problem with the user's own code. If the number of errors is less than the second preset threshold, it is considered that the errors need to be counted in this circumstance, and it is considered that the error information meets the preset condition in this regard.

Step 405, acquiring, in response to determining that the error information meets the preset condition, a count number of times of an error type indicated by the error information; updating the count number of times; and generating warning information, based on the updated count number of times and the error type.

In the present embodiment, after determining that the error information meets the preset condition, the executing body may determine the count number of times of the error type indicated by the error information. The count number of times may be obtained by analyzing the error information, which may be stored in a database. The executing body may acquire the count number of times by reading the database. Then, the count number of times may be updated. Here, update may refer to adding 1 to the count number of times. The executing body may generate the warning information based on the updated count number of times and the error type. The executing body may directly use the updated count number of times and the error type as the warning information.

It should be noted that, if the count number of times stored in the database is related to a single user, then the executing body may take a maximum value from the count number of times of the error type corresponding to each user as a final count number of times of the error type.

Step 406, outputting the warning information.

Step 407, generating, in response to determining that the error information meets the preset condition, formatted information based on the error information; and storing the formatted information.

The executing body may also generate the formatted information based on the error information when it is determined that the error information meets the preset condition. The executing body may extract the information in Table 1 above from the error information to obtain the formatted information. Then, the executing body may store the formatted information.

Step 408, outputting, in response to determining that the error information does not meet the preset condition, the error information to the user.

In the present embodiment, if the executing body determines that the error information does not meet the preset condition, it may be determined that the above error is caused by the user's own code. In this circumstance, the executing body may output the error information to the user.

The method for testing a code provided by an embodiment of the present disclosure may count the error indicated by the error information that meets the condition, and output the warning information to facilitate the person in charge of the CI system to troubleshoot the above error. At the same time, the error caused by the user's own code may also be outputted to the user for self-examination.

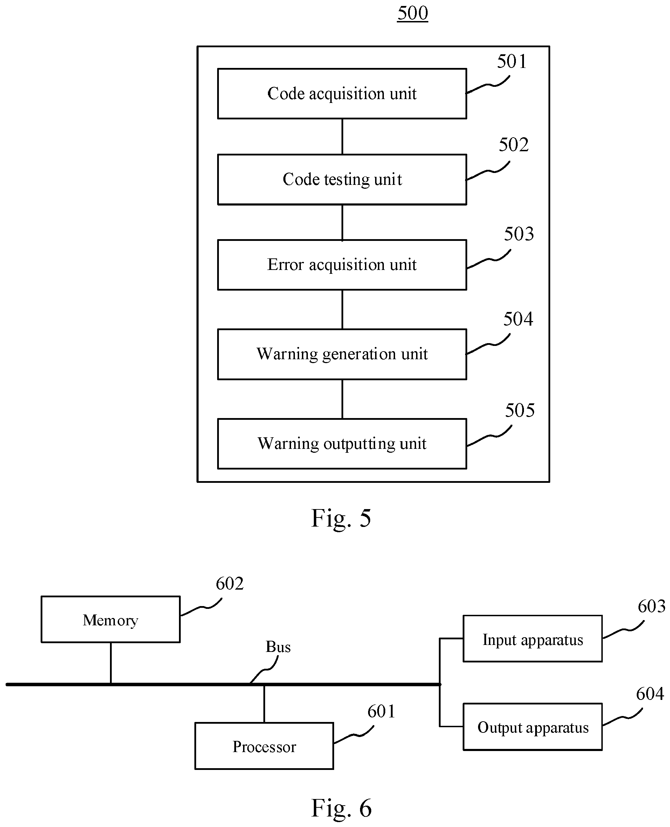

With further reference to Fig. 5, as an implementation of the method shown in the above figures, an embodiment of the present disclosure provides an apparatus for testing a code, and an embodiment of the apparatus may correspond to an embodiment of the method as shown in Fig. 2. The apparatus may be applied to various electronic devices.

As shown in Fig. 5, an apparatus 500 for testing a code of the present embodiment includes: a code acquisition unit 501, a code testing unit 502, an error acquisition unit 503, a warning generation unit 504 and a warning outputting unit 505.

The code acquisition unit 501 is configured to determine, in response to receiving a code submission request of a user, a code submitted by the user.

The code testing unit 502 is configured to perform integration testing on the code, and perform at least one preset test task.

The error acquisition unit 503 is configured to acquire error information of the at least one preset test task.

The warning generation unit 504 is configured to generate, in response to determining that the error information meets a preset condition, warning information based on the error information.

The warning outputting unit 505 is configured to output the warning information.

In some alternative implementations of the present embodiment, the apparatus 500 may further include a condition determination unit not shown in Fig. 5, configured to: determine, for each test task indicated by the error information, the number of executions of the test task; determine, in response to determining that the number of executions of the test task is less than a first preset threshold, an error type of the test task and a number of errors corresponding to each error type; determine, in response to determining that the error type is a preset type and an error corresponding to the preset type, the number of errors of the error type; and determining, in response to determining that the number of the error type is less than a second preset threshold, that the error information meets the preset condition.

In some alternative implementations of the present embodiment, the warning generation unit 504 may be further configured to: acquire a count number of times of an error type indicated by the error information; update incrementally the count number of times; and generate the warning information, based on the incrementally updated count number of times and the error type.

In some alternative implementations of the present embodiment, the apparatus 500 may further include a storage unit not shown in Fig. 5, configured to: generate, in response to determining that the error information meets the preset condition, formatted information based on the error information; store the formatted information.

In some alternative implementations of the present embodiment, the apparatus 500 may further include an error outputting unit not shown in Fig. 5, configured to output, in response to determining that the error information does not meet the preset condition, the error information to the user.

It should be understood that the units 501 to 505 recorded in the apparatus 500 for testing a code correspond to the steps in the method described with reference to Fig. 2 respectively. Therefore, the operations and features described above for the method for testing a code are also applicable to the apparatus 500 and the units contained therein, and detailed description thereof will be omitted.

According to an embodiment of the present disclosure, the present disclosure also provides an electronic device and a readable storage medium.

As shown in Fig. 6, a block diagram of an electronic device for implementing the method for testing a code in an embodiment of the present disclosure is illustrated. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system) . In Fig. 6, one processor 601 is used as an example.

The memory 602 is a non-transitory computer readable storage medium provided by embodiments of the present disclosure. The memory stores instructions executable by at least one processor, so that the at least one processor performs the method for testing a code provided by embodiments of the present disclosure. The non-transitory computer readable storage medium of embodiments of the present disclosure stores computer instructions for causing a computer to perform the method for testing a code provided by embodiments of the present disclosure.

The memory 602, as a non-transitory computer readable storage medium, may be used to store non-transitory software programs, non-transitory computer executable programs and modules, such as program instructions/modules (for example, the code acquisition unit 501, the code testing unit 502, the error acquisition unit 503, the warning generation unit 504 and the warning outputting unit 505 as shown in Fig. 5) corresponding to the method for testing a code in embodiments of the present disclosure. The processor 601 executes the non-transitory software programs, instructions, and modules stored in the memory 602 to execute various functional applications and data processing of the server, that is, to implement the method for testing a code in the foregoing method embodiments.

The memory 602 may include a storage program area and a storage data area, where the storage program area may store an operating system and an application program required by at least one function; and the storage data area may store data created by the use of the electronic device for testing a code. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device for testing a code through a network. Examples of such networks include, but are not limited to, the Internet, enterprise intranets, local area networks, mobile communication networks and combinations thereof.

The electronic device of the method for testing a code may further include: an input apparatus 603 and an output apparatus 604. The processor 601, the memory 602, the input apparatus 603, and the output apparatus 604 may be connected through a bus or in other methods. In Fig. 6, connection through the bus is used as an example.

The input apparatus 603 may receive input digital or character information, and generate key signal inputs related to user settings and function control of the electronic device for testing a code, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network) . Examples of the communication network include a local area network (LAN), a wide area network (WAN) and the Internet.

The computer system may include a client and a server. The client and the server are generally remote from each other and typically interact through the communication network. The relationship between the client and the server is generated through computer programs running on the respective computers and having a client-server relationship to each other.

According to an embodiment of the present disclosure, the present disclosure further provides a computer program product including a computer program, where the computer program, when executed by a processor, implements the method for testing a code.

The technical solution according to embodiments of the present disclosure, can warn abnormal errors of a CI system in a huge number of CI tasks, and improve a stability and accuracy of the CI system.

It should be understood that the various forms of processes shown above can be used to reorder, add, or delete steps. For example, the steps disclosed in embodiments of the present disclosure can be executed in parallel, sequentially, or in different orders, as long as the desired results of the technical solutions disclosed in embodiments of the present disclosure can be achieved. This is not limited herein.

The above specific implementations do not constitute a limitation to the protection scope of the present disclosure. It should be understood by those skilled in the art that various modifications, combinations, sub-combinations, and replacements may be made according to the design requirements and other factors.

## Claims

1. A method for testing a code, the method comprising:
determining (201, 401), in response to receiving a code submission request of a user, a code submitted by the user;
performing (202, 402) integration testing on the code, and performing at least one preset test task;
acquiring (203, 403) error information of the at least one preset test task, wherein the error information is outputted when the code fails to perform a test task;
generating (204), in response to determining that the error information meets a preset condition, warning information based on the error information, wherein the preset condition includes: occurrence time of an error corresponding to the error information is within a preset period, an error type of the error belongs to a preset type, the code corresponding to the error is an abnormal code; and
outputting (205, 406) the warning information,
wherein the method further comprises:
determining (404), for each test task indicated by the error information, a number of executions of the test task;
determining (404), in response to determining that the number of executions of the test task is 1, an error type of an error in the test task and a number of errors corresponding to each error type;
determining (404), in response to determining that the error type is a preset type and the number of errors corresponding to the preset type is less than a second preset threshold, that the error information meets the preset condition; and
determining, in response to determining that the number of executions of the test task is greater than or equal to 2, that the error information meets the preset condition.

2. The method according to claim 1, wherein the generating (204) the warning information based on the error information, comprises:
acquiring (405) a count number of times of an error type indicated by the error information;
updating (405) the count number of times; and
generating (405) the warning information, based on the updated count number of times and the error type.

3. The method according to any one of claims 1-2, wherein the method further comprises:
generating (407), in response to determining that the error information meets the preset condition, formatted information based on the error information;
storing (407) the formatted information.

4. The method according to any one of claims 1-3, wherein the method further comprises:
outputting (408), in response to determining that the error information does not meet the preset condition, the error information to the user.

5. An apparatus (500) for testing a code, the apparatus comprising:
a code acquisition unit (501), configured to determine, in response to receiving a code submission request of a user, a code submitted by the user;
a code testing unit (502), configured to perform integration testing on the code, and perform at least one preset test task;
an error acquisition unit (503), configured to acquire error information of the at least one preset test task, wherein the error information is outputted when the code fails to perform a test task;
a warning generation unit (504), configured to generate, in response to determining that the error information meets a preset condition, warning information based on the error information, wherein the preset condition includes: occurrence time of an error corresponding to the error information is within a preset period, an error type of the error belongs to a preset type, the code corresponding to the error is an abnormal code; and
a warning outputting unit (505), configured to output the warning information,
wherein the apparatus further comprises a condition determination unit, configured to:
determine, for each test task indicated by the error information, a number of executions of the test task;
determine, in response to determining that the number of executions of an error in the test task is less than a first preset threshold, an error type of the test task and a number of errors corresponding to each error type;
determine, in response to determining that the error type is a preset type and the number of errors corresponding to the preset type is less than a second preset threshold, that the error information meets the preset condition; and
determining, in response to determining that the number of executions of the test task is greater than or equal to 2, that the error information meets the preset condition.

6. The apparatus according to claim 5, wherein the warning generation unit (504) is further configured to:
acquire a count number of times of an error type indicated by the error information;
update the count number of times; and
generate the warning information, based on the updated count number of times and the error type.

7. The apparatus according to any one of claims 5-6, wherein the apparatus further comprises a storage unit, configured to:
generate, in response to determining that the error information meets the preset condition, formatted information based on the error information;
store the formatted information.

8. The apparatus according to any one of claims 5-7, wherein the apparatus further comprises:
an error outputting unit, configured to output, in response to determining that the error information does not meet the preset condition, the error information to the user.

9. An electronic device for testing a code, comprising:
at least one processor (601); and
a memory (602), communicatively connected with the at least one processor (601);
the memory (602) storing instructions executable by the at least one processor (601), and the instructions, when executed by the at least one processor (601), causing the at least one processor (601) to perform the method according to any one of claims 1-4.

10. A non-transitory computer readable storage medium (602), storing computer instructions, the computer instructions being used to cause a computer to perform the method according to any one of claims 1-4.

11. A computer program product comprising a computer program, the computer program, when executed by a processor (701), implementing the method according to any one of claims 1-4.

## Patentansprüche

1. Ein Verfahren zum Prüfen eines Codes, wobei das Verfahren Folgendes umfasst:
Bestimmen (201, 401), als Reaktion auf das Empfangen einer Codeübermittlungsanforderung eines Benutzers, eines von dem Benutzer übermittelten Codes;
Durchführen (202, 402) einer Integrationsprüfung am Code und Durchführen von mindestens einer voreingestellten Prüfaufgabe;
Erfassen (203, 403) von Fehlerinformationen der mindestens einen voreingestellten Prüfaufgabe, wobei die Fehlerinformationen ausgegeben werden, wenn der Code beim Durchführen einer Prüfaufgabe fehlschlägt;
Generieren (204), als Reaktion auf das Bestimmen, dass die Fehlerinformationen eine voreingestellte Bedingung erfüllen, von Warninformationen basierend auf den Fehlinformationen, wobei die voreingestellte Bedingung Folgendes beinhaltet: Zeitpunkt des Auftretens eines Fehlers liegt den Fehlinformationen entsprechend innerhalb eines voreingestellten Zeitraums, ein Fehlertyp des Fehlers gehört zu einem voreingestellten Typ, der Code ist dem Fehler entsprechend ein anormaler Code; und
Ausgeben (205, 406) der Warninformationen, wobei das Verfahren ferner Folgendes umfasst:
Bestimmen (404), für jede durch die Fehlerinformationen angegebene Prüfaufgabe, einer Anzahl von Ausführungen der Prüfaufgabe;
Bestimmen (404), als Reaktion auf das Bestimmen, dass die Anzahl von Ausführungen der Prüfaufgabe 1 ist, eines Fehlertyps eines Fehlers in der Prüfaufgabe und einer Anzahl von jedem Fehlertyp entsprechenden Fehlern;
Bestimmen (404), als Reaktion auf das Bestimmen, dass der Fehlertyp ein voreingestellter Typ und die Anzahl von dem voreingestellten Typ entsprechenden Fehlern kleiner als ein zweiter voreingestellter Grenzwert ist, dass die Fehlerinformationen die voreingestellte Bedingung erfüllen; und
Bestimmen, als Reaktion auf das Bestimmen, dass die Anzahl von Ausführungen der Testaufgabe größer als oder gleich 2 ist, dass die Fehlerinformationen die voreingestellte Bedingung erfüllen.

2. Das Verfahren gemäß Anspruch 1, wobei das Generieren (204) der Warninformationen basierend auf den Fehlerinformationen Folgendes umfasst:
Erfassen (405) einer gezählten Anzahl von Malen eines durch die Fehlerinformationen angegebenen Fehlertyps;
Aktualisieren (405) der gezählten Anzahl von Malen; und
Generieren (405) der Warninformationen basierend auf der gezählten Anzahl von Malen und dem Fehlertyp.

3. Das Verfahren gemäß einem der Ansprüche 1-2, wobei das Verfahren ferner Folgendes umfasst:
Generieren (407), als Reaktion auf das Bestimmen, dass die Fehlerinformationen die voreingestellte Bedingung erfüllen, von formatierten Informationen basierend auf den Fehlinformationen;
Speichern (407) der formatierten Informationen.

4. Das Verfahren gemäß einem der Ansprüche 1-3, wobei das Verfahren ferner Folgendes umfasst:
Ausgeben (408), als Reaktion auf das Bestimmen, dass die Fehlerinformationen die voreingestellte Bedingung nicht erfüllen, der Fehlerinformationen an den Benutzer.

5. Eine Einrichtung (500) zum Prüfen eines Codes, wobei die Einrichtung Folgendes umfasst:
eine Codeerfassungseinheit (501), die dazu konfiguriert ist, als Reaktion auf das Empfangen einer Codeübermittlungsanforderung eines Benutzers einen von dem Benutzer übermittelten Code zu bestimmen;
eine Codeprüfungseinheit (502), die dazu konfiguriert ist, eine Integrationsprüfung am Code durchzuführen und mindestens eine voreingestellte Prüfaufgabe durchzuführen;
eine Fehlererfassungseinheit (503), die dazu konfiguriert ist, Fehlerinformationen der mindestens einen voreingestellten Prüfaufgabe zu erfassen, wobei die Fehlerinformationen ausgegeben werden, wenn der Code beim Durchführen einer Prüfaufgabe fehlschlägt;
eine Warnungsgenerationseinheit (504), die dazu konfiguriert ist, als Reaktion auf das Bestimmen, dass die Fehlerinformationen eine voreingestellte Bedingung erfüllen, Warninformationen basierend auf den Fehlinformationen zu generieren, wobei die voreingestellte Bedingung Folgendes beinhaltet: Zeitpunkt des Auftretens eines Fehlers liegt den Fehlinformationen entsprechend innerhalb eines voreingestellten Zeitraums, ein Fehlertyp des Fehlers gehört zu einem voreingestellten Typ, der Code ist dem Fehler entsprechend ein anormaler Code; und
eine Warnungsausgabeeinheit (505), die dazu konfiguriert ist, die Warninformationen auszugeben,
wobei die Einrichtung ferner eine Bedingungsbestimmungseinheit umfasst, die für Folgendes konfiguriert ist:
Bestimmen, für jede durch die Fehlerinformationen angegebene Prüfaufgabe, einer Anzahl von Ausführungen der Prüfaufgabe;
Bestimmen als Reaktion auf das Bestimmen, dass die Anzahl von Ausführungen eines Fehlers in der Prüfaufgabe kleiner als ein erster voreingestellter Grenzwert ist, eines Fehlertyps der Prüfaufgabe und einer Anzahl von jedem Fehlertyp entsprechenden Fehlern;
Bestimmen, als Reaktion auf das Bestimmen, dass der Fehlertyp ein voreingestellter Typ und die Anzahl von dem voreingestellten Typ entsprechenden Fehlern kleiner als ein zweiter voreingestellter Grenzwert ist, dass die Fehlerinformationen die voreingestellte Bedingung erfüllen; und
Bestimmen, als Reaktion auf das Bestimmen, dass die Anzahl von Ausführungen der Testaufgabe größer als oder gleich 2 ist, dass die Fehlerinformationen die voreingestellte Bedingung erfüllen.

6. Die Einrichtung gemäß Anspruch 5, wobei die Warnungsgenerationseinheit (504) ferner für Folgendes konfiguriert ist:
Erfassen einer gezählten Anzahl von Malen eines durch die Fehlerinformationen angegebenen Fehlertyps;
Aktualisieren der gezählten Anzahl von Malen; und
Generieren der Warninformationen basierend auf der gezählten Anzahl von Malen und dem Fehlertyp.

7. Die Einrichtung gemäß einem der Ansprüche 5-6, wobei die Einrichtung eine Speichereinheit umfasst, die für Folgendes konfiguriert ist:
Generieren, als Reaktion auf das Bestimmen, dass die Fehlerinformationen die voreingestellte Bedingung erfüllen, von formatierten Informationen basierend auf den Fehlinformationen;
Speichern der formatierten Informationen.

8. Die Einrichtung gemäß einem der Ansprüche 5-7, wobei die Einrichtung ferner Folgendes umfasst:
eine Fehlerausgabeeinheit, die dazu konfiguriert ist, als Reaktion auf das Bestimmen, dass die Fehlerinformationen die voreingestellte Bedingung nicht erfüllen, die Fehlerinformationen an den Benutzer auszugeben.

9. Eine elektronische Vorrichtung zum Testen eines Codes, die Folgendes umfasst:
mindestens einen Prozessor (601); und
einen Speicher (602), der mit dem mindestens einen Prozessor (601) kommunikativ verbunden ist;
wobei der Speicher (602) Anweisungen speichert, die durch den mindestens einen Prozessor (601) ausführbar sind, und die Anweisungen, wenn sie durch den mindestens einen Prozessor (601) ausgeführt werden, den mindestens einen Prozessor (601) veranlassen, das Verfahren gemäß einem der Ansprüche 1-4 durchzuführen.

10. Ein nicht transitorisches, computerlesbares Speichermedium (602), das Computeranweisungen speichert, wobei die Computeranweisungen dazu verwendet werden, einen Computer zu veranlassen, das Verfahren gemäß einem der Ansprüche 1-4 durchzuführen.

11. Ein Computerprogrammprodukt, das ein Computerprogramm umfasst, wobei das Computerprogramm, wenn es durch einen Prozessor (701) ausgeführt wird, das Verfahren gemäß einem der Ansprüche 1-4 implementiert

## Revendications

1. Un procédé conçu pour tester un code, et ce procédé se compose des éléments suivants :
la détermination (201, 401), en réponse à la réception d'une demande de soumission de code d'un utilisateur, du code soumis par cet utilisateur
la réalisation (202, 402) d'essais d'intégration portant sur ce code et l'exécution d'au moins une tâche prédéterminée d'essai
l'acquisition (203, 403) d'informations sur une erreur pour cette tâche, au nombre d'au moins une, et ces informations sur cette erreur sont sorties lorsque ce code ne permet pas d'exécuter une tâche d'essai
la production (204), en réponse à la détermination que les informations sur une erreur correspondent bien à une condition prédéterminée, d'informations de mise en garde basées sur les informations sur cette erreur, et cette condition prédéterminée peut être l'une des possibilités suivantes : l'heure durant laquelle une erreur s'est produite et fait partie des informations sur cette erreur se situe durant une période prédéterminée, le type d'erreur de l'erreur fait partie d'un type prédéterminé, le code correspondant à cette erreur est un code anormal, et
la sortie (205, 406) des informations de mises en garde,
et ce procédé comporte, en outre, les éléments suivants :
la détermination (404), pour chaque tâche d'essai indiquée par les informations sur l'erreur, du nombre d'exécutions de cette tâche d'essai
la détermination (404), en réponse à la détermination que le nombre d'exécutions de la tâche d'essai est égal à 1, du type d'erreur de la tâche d'essai et d'un nombre d'erreurs correspondant à chaque type d'erreur
la détermination (404), en réponse à la détermination que le type d'erreur est un type prédéterminé et que le nombre d'erreurs correspondant à ce type prédéterminé est inférieur à un deuxième seuil prédéterminé, que les informations sur cette erreur correspondent bien à la condition prédéterminée, et
la détermination, en réponse à la détermination que le nombre d'exécutions de la tâche d'essai est égal ou supérieur à 2, que les informations sur l'erreur correspondent bien à la condition prédéterminée.

2. Le procédé que décrit la revendication 1, si ce n'est que la production (204) des informations de mises en garde basées sur les informations sur l'erreur, se compose des éléments suivants :
l'acquisition (405) d'un compte qui correspond au nombre de fois d'un type d'erreur indiqué par les informations sur les erreurs
la mise à jour (405) du compte qui correspond au nombre de fois, et
la production (405) d'informations de mises en garde, basées sur le compte mis à jour qui correspond au nombre de fois et sur le type d'erreur.

3. Le procédé que décrit la revendication 1 ou 2, si ce n'est que ce procédé comporte, en outre :
la production (407), en réponse à la détermination que les informations sur l'erreur correspondent bien à la condition prédéterminée, d'informations formatées basées sur les informations sur l'erreur
la mémorisation (407) des informations formatées.

4. Le procédé que décrit l'une ou l'autre des revendications 1 à 3, si ce n'est que ce procédé comporte, en outre :
la sortie (408), en réponse à la détermination que les informations sur l'erreur ne correspondent pas à la condition prédéterminée, des informations sur l'erreur, à destination de l'utilisateur.

5. Un appareil (500) conçu pour tester un code, et cet appareil se compose des éléments suivants :
un groupe d'acquisition de code (501) configuré pour déterminer, en réponse à la réception d'une demande de soumission de code d'un utilisateur, le code soumis par cet utilisateur
un groupe conçu pour tester des codes (502), configuré pour réaliser des essais d'intégration portant sur ce code et pour exécuter au moins une tâche prédéterminée d'essai
un groupe d'acquisition d'erreur (503), configuré pour acquérir des informations sur une erreur pour une tâche d'essai prédéterminée, au nombre d'au moins une, et ces informations sur cette erreur sont sorties lorsque ce code ne permet pas d'exécuter une tâche d'essai
un groupe de production de mises en garde (504), configuré pour produire, en réponse à la détermination que les informations sur une erreur correspondent bien à une condition prédéterminée, d'informations de mises en garde basées sur les informations sur cette erreur, et cette condition prédéterminée peut être l'une des possibilités suivantes :
l'heure durant laquelle une erreur s'est produite et fait partie des informations sur cette erreur se situe durant une période prédéterminée, le type d'erreur de l'erreur fait partie d'un type prédéterminé, le code correspondant à cette erreur est un code anormal, et
un groupe de sortie de mises en garde (505) configuré pour sortir les informations de mises en garde,
et si ce n'est que cet appareil comporte, en outre, un groupe de détermination de condition, configuré pour :
déterminer, pour chaque tâche d'essai indiquée par les informations sur l'erreur, un nombre d'exécutions de la tâche d'essai
déterminer, en réponse à la détermination que le nombre d'exécutions d'une erreur dans la tâche d'essai est inférieur à un premier seuil prédéterminé, un type d'erreur de la tâche d'essai et un nombre d'erreurs correspondant à chaque type d'erreur
déterminer, en réponse à la détermination que le type d'erreur est un type prédéterminé et que le nombre d'erreurs correspondant à ce type prédéterminé est inférieur à un deuxième seuil prédéterminé, que les informations sur cette erreur correspondent bien à la condition prédéterminée, et
la détermination, en réponse à la détermination que le nombre d'exécutions de la tâche d'essai est égal ou supérieur à 2, que les informations sur l'erreur correspondent bien à la condition prédéterminée.

6. L'appareil que décrit la revendication 5, si ce n'est que le groupe de production de mises en garde (504) est, en outre, configuré pour :
acquérir un compte qui correspond au nombre de fois d'un type d'erreur indiqué par les informations sur les erreurs
mettre à jour (405) le compte qui correspond au nombre de fois, et
produire des informations de mises en garde, basées sur le compte mis à jour qui correspond au nombre de fois et sur le type d'erreur.

7. Le procédé que décrit la revendication 5 ou 6, si ce n'est que ce procédé comporte, en outre, un groupe de mémorisation configuré pour :
produire, en réponse à la détermination que les informations sur l'erreur correspondent bien à la condition prédéterminée, des informations formatées basées sur les informations sur les erreurs
mémoriser les informations formatées.

8. L'appareil que décrit l'une ou l'autre des revendications 5 à 7, si ce n'est que cet appareil comporte, en outre :
un groupe de sortie d'erreurs, configuré pour sortir, en réponse à la détermination que les informations sur l'erreur ne correspondent pas à la condition prédéterminée, des informations sur l'erreur, à destination de l'utilisateur.

9. Un dispositif électronique pour tester un code et ce dispositif se compose des éléments suivants :
au moins un processeur (601) et
une mémoire (602) raccordée, sur le plan des communications, à au moins un processeur (601) et
cette mémoire (602) contient des instructions exécutables par au moins un processeur (601), et ces instructions, lors de leur exécution par au moins un processeur (601), entraînent la réalisation de ce procédé par au moins un processeur (601) selon les dispositions décrites dans l'une ou l'autre des revendications 1 à 4.

10. Un support de mémoire électronique non transitoire (602) qui contient des consignes informatisées et ces consignes sont utilisées par l'ordinateur pour réaliser ce procédé selon les dispositions décrites dans l'une ou l'autre des revendications 1 à 4.

11. Un produit du type programme informatique qui se compose d'un programme informatique, et ce programme informatique, lors de son exécution par un processeur (701), met en oeuvre le procédé selon l'une ou l'autre des revendications 1 à 4.
